# EUROPÄISCHE PATENTSCHRIFT

(11) **EP 3 467 204 B1**
(45) Veröffentlichungstag und Bekanntmachung des Hinweises auf die Patenterteilung: **09.12.2020**
(21) Anmeldenummer: 17195030.6
(22) Anmeldetag: 05.10.2017
(51) Int. Cl.: E02B 17/00, E04H 12/00

(54) **ÜBERGANGSSTÜCK ZUM VERBINDEN EINES OBEREN TURMABSCHNITTS MIT EINEM UNTEREN TURMABSCHNITT MITTELS VERBINDUNGSPROFILEN**
TRANSITION PIECE FOR CONNECTING AN UPPER TOWER SECTION WITH A LOWER TOWER SECTION USING CONNECTING PROFILES
MANCHON DE RACCORDEMENT PERMETTANT DE RACCORDER UNE SECTION DE TOUR SUPÉRIEUR À UNE SECTION DE TOUR INFÉRIEUR AU MOYEN DES PROFILS DE CONNEXION

(43) Veröffentlichungstag der Anmeldung: 10.04.2019
(73) Patentinhaber: Notus Energy Plan GmbH & Co. KG, 14469 Potsdam (DE)
(72) Erfinder: Drieschner, Martin, 13086 Berlin (DE); Petryna, Yuriy, 12207 Berlin (DE); Köpke, Bodo, 13467 Berlin (DE); Steiner, Tilo, 18439 Stralsund (DE); Romer, Steve, 18437 Stralsund (DE); Grawe, Gunnar, 14482 Potsdam (DE)
(74) Vertreter: Pfenning, Meinig & Partner mbB

(56) Entgegenhaltungen:
- WO-A1-2014/067001
- GB-A- 2 419 150
- GB-A- 2 507 248

## Beschreibung

Die Erfindung betrifft ein Übergangsstück zum Verbinden eines oberen Turmabschnittes mit einem unteren Turmabschnitt mittels Verbindungsprofilen. Insbesondere eignet sich das Übergangsstück für einen Hybridturm, beispielsweise für eine Windenergieanlage, wobei der obere Turmabschnitt beispielsweise als Stahlrohrturm und der untere Turmabschnitt beispielsweise als Gitterturmstruktur ausgebildet ist.

Typischerweise werden Türme für Onshore-Windenergieanlagen als Rohrtürme, insbesondere Stahlrohrtürme, ausgeführt. Diese Bauweise, auch Schalenbauweise genannt, hat den Vorteil, dass die Rohrtürme aus einzelnen Segmenten bestehen, sodass die einzelnen Turmbauteile transportierbar sind. Eine Transportfähigkeit ist insbesondere hinsichtlich der Turmdurchmesser von großen Turmhöhen eine einschränkende Größe, da bei Nabenhöhen von mehr als 120 m ein unterer Durchmesser des Rohrturms 4,5 m überschreiten würde. Durchmesser von mehr als 4,5 m sind jedoch nur schwer auf Straßen transportierbar, da Brücken über Landstraßen und Autobahnen häufig eine entsprechende maximale Durchfahrtshöhe aufweisen. Onshore-Stahlrohrtürme sind ohne technische Zusatzmaßnahmen (wie z.B. zusätzliche Längsteilungen der einzelnen Segmente) somit auf Nabenhöhen von etwa 120 m begrenzt.

Ferner sind Hybridturmbauweisen, beispielsweise Stahlhybridtürme und Spannbetonhybridtürme, aus dem Stand der Technik bekannt. Stahlhybridtürme weisen einen Gittermast und einen Stahlrohrturm auf. Spannbetonhybridtürme weisen einen Spannbetonturmabschnitt und einen Stahlrohrturmabschnitt auf. Stahlhybridtürme haben den Vorteil, dass die unteren, meist größere Durchmesser aufweisenden, Turmabschnitte aus vergleichsweise günstigen und zusammenbaubaren Einzelteilen bestehen und eine Gittertragwerkstruktur bilden und die oberen Turmabschnitte als Stahlrohrturm ausgebildet sind. Diese Bauweise erfordert jedoch technisch komplexe Lösungen für einen Übergang zwischen der unteren, gitterförmigen Struktur auf die obere, rohrförmige Struktur. Bisher sind dabei im Wesentlichen nur Übergangsstücke mit hohem Materialbedarf und komplexem oder überdimensioniertem Aufbau bekannt, die insbesondere kostspielig oder vergleichsweise schlecht transportabel sind.

Dokument GB 2 507 248 A zeigt ein Übergangsstück zum Übertragen von strukturellen Lasten von einem Turm eines Windkraftgenerators auf sein Fundament. Es besteht aus einem konischen Zentralkörper, der mit einer oberen Platte, einer mittleren Platte und einer unteren Platte, ferner durch Scher- und Knotenbleche verbunden, verbunden ist, und einer Reihe von Beinen, die mit einer Fundamentstruktur verbunden sind. Der Turmgelenkring kann zur Reduzierung der Spannungskonzentration eine Kehlkante aufweisen.

Dokument GB 2 419 50 A bezieht sich auf einen Ringknoten aus Stahlguss für eine Offshore-Windkraftanlage oder eine ähnliche Turmstützbasis, der einen oder mehrere Teilstutzenfortsätze aufweist, die als halbkreisförmige, abschnittsweise Vorsprünge ausgebildet sind, so dass verbindende rohrförmige Nebenbeine teilweise mit diesen Stutzen und teilweise mit dem Turmkörper der Windkraftanlage verbunden sind, und daher Verbindungsenden in unterschiedlichen Winkeln aufweisen.

Die EP 2 647 764 A1 zeigt beispielsweise ein Übergangsstück zur Verbindung eines Turms mit einer gitterartigen Gründungsstruktur im Offshore-Bereich. Dabei umfasst das Übergangsstück einen Zylinder, wobei der Zylinder an seinem oberen Ende einen Flansch zur Abstützung des Turmfußes aufweist und an seiner Mantelfläche mit Kastenblechen zur Einleitung der einwirkenden Kräfte in die aus Hauptstreben und Querstreben bestehende Gründungsstruktur versehen ist.

Die DE 10 2013 221 681 A1 zeigt ein weiteres Beispiel für ein Übergangsstück für einen Hybridturm einer Windturbine. Das Übergangsstück umfasst eine Adapterschale und mehrere Adapterplatten, wobei die Adapterschale rohrförmig ausgebildet ist und die Adapterschale und die Adapterplatten derart miteinander verbunden sind, dass sich die Adapterplatten und die Adapterschale in Längsrichtung des Turmes teilweise überlappen. Die Befestigungsmittel können zum Beispiel Schrauben, Nieten oder Schließringbolzen sein, vorteilhafterweise werden aber Schrauben verwendet, da diese bei einer Wartung des Übergangsstücks und/oder des Turms wieder lösbar sind. Insbesondere bei der DE 10 2013 221 681 A1 wird deutlich, dass aufgrund einer Kleinteiligkeit von verwendeten Tragelementen eine Vielzahl von Befestigungsmitteln nötig ist, um einen sicheren Kraftfluss von dem oberen Turmabschnitt in den unteren Turmabschnitt zu ermöglichen.

Angesichts des Stands der Technik liegt der Erfindung die Aufgabe zugrunde ein alternatives Übergangsstück vorzuschlagen, das einen sicheren Kraftfluss von einem oberen zu einem unteren Turmabschnitt ermöglicht und dabei vergleichsweise wirtschaftlich ist.

Diese Aufgabe wird gelöst durch ein Übergangsstück gemäß dem Anspruch 1. Vorteilhafte Ausführungen und Weiterbildungen der Erfindung sind in den abhängigen Ansprüchen angeführt.

Das erfindungsgemäße Übergangsstück ist mit einem oberen rohrförmigen Turmabschnitt sowie mit Verbindungsprofilen verbindbar. Die Verbindungsprofile wiederum sind mit einem unteren, vorzugsweise als Gitterstruktur ausgebildeten Turmabschnitt verbindbar. Zum Verbinden des Übergangsstücks mit dem oberen Turmabschnitt weist das Übergangsstück ein oberes Verbindungselement auf. Das obere Verbindungselement ist dabei beispielsweise als Flansch, vorzugsweise als Ringflansch, ausgebildet. Ferner weist das Übergangsstück eine sich nach oben kegelstumpfförmig aufweitende Mantelinnenfläche auf. Die kegelstumpfförmige Mantelinnenfläche kann entsprechend eine Mantelinnenfläche eines hohlen Kegelstumpfes sein, der zumindest bereichsweise eine Kegelstumpfmantelaußenfläche aufweisen kann. Der hohle Kegelstumpf kann dabei eine Tragstruktur des Übergangsstücks bilden. Vorzugsweise weist der obere Turmabschnitt, wie für Stahlrohrtürme üblich, einen Ringflansch auf. Die kegelstumpfförmige Mantelinnenfläche des Übergangsstücks ist typischerweise rotationssymmetrisch um eine Kegelstumpflängsachse angeordnet. Zumindest drei äußere Verbindungsflächen des Übergangsstücks sind im Wesentlichen rotationssymmetrisch um die Kegelstumpflängsachse an einer Außenseite des Übergangsstücks angeordnet. Vorzugsweise weist das Übergangsstück eine Mehrzahl von Kragen auf, die an der Außenseite des Übergangsstücks auskragen. Der Kragen kann dabei eine geschlossene Form aufweisen und beispielsweise einen Flansch in Form eines Rahmens bilden. Die Verbindungsfläche bildet dann eine Oberfläche des Kragens, bzw. Flanschs. Die Kragen sind vorzugsweise einstückig mit dem Übergangsstück ausgebildet. Dabei sind die äußeren Verbindungsflächen folglich Teil des Übergangsstücks. An den äußeren Verbindungsflächen ist das Übergangsstück mit je einem mit einem unteren Turmabschnitt verbindbaren Verbindungsprofil verbindbar. Dazu können die Verbindungsprofile beispielsweise einen Flansch aufweisen, dessen Form mit der Form des Kragens, insbesondere mit den Verbindungsflächen, korrespondiert. Eine Oberfläche des Flansches des Verbindungsprofils ist an die Verbindungsfläche anlegbar und kann mit dieser, beispielsweise mittels Schweißverbindungen oder Schraubverbindungen, verbunden werden. Die Verbindungsprofile können an einer Oberseite ferner einen rahmenförmigen Flansch aufweisen, dessen Form mit dem Kragen des Übergangsstücks derart korrespondiert, sodass der rahmenförmige Flansch des Verbindungsprofils in den Kragen des Übergangsstücks, beispielsweise formschlüssig, einsetzbar ist. Ergänzend oder alternativ kann eine stoffschlüssige Verbindung vorgesehen werden. Dabei können zusätzlich oder alternativ Steckverbindungen, Schraubenverbindungen, Schnappverbindungen, Klebverbindungen oder Schweißverbindungen verwendet werden. Die Verbindungsprofile können mit dem Übergangsstück auch mittels Schubknaggen verbindbar sein. Dabei kann der rahmenförmige Flansch die Schubknagge bilden.

Der obere rohrförmige Turmabschnitt kann beispielsweise als Stahlrohrturm, insbesondere als Schalentragwerk, ausgebildet sein. Das Übergangsstück kann zumindest bereichsweise als Schalentragwerk ausgebildet sein. Typischerweise ist das Übergangsstück überwiegend als Schalentragwerk ausgebildet. Das Übergangsstück kann eine Symbiose (oder vorteilhafte Verschmelzung/Kombination) aus Schalen- und Stabtragwerk sein.

Die kegelstumpfförmige Mantelinnenfläche des Übergangsstücks kann mit der Kegelstumpflängsachse typischerweise einen Winkel von mindestens 20°, vorzugsweise mindestens 24° einschließen. Dieser Winkel zwischen der kegelstumpfförmigen Mantelfläche und der Kegelstumpflängsachse kann beispielsweise maximal 45°, vorzugsweise maximal 60° einschließen.

Das Übergangsstück kann eine Begehungsöffnung aufweisen. So kann Montage- und Wartungspersonal in das Innere des Übergangsstücks gelangen. Eine Begehungsöffnung kann beispielsweise an einer Unterseite des Übergangsstücks vorgesehen sein. Dabei kann beispielsweise eine kreisrunde Grundfläche des Kegelstumpfes eine Ausnehmung aufweisen, die als Begehungsöffnung dienen kann. Ein Radius einer kreisrunden Begehungsöffnung kann nach DGUV Regel 113-004 Anhang 7, "Mindestanforderung für Zugang mit persönlicher Schutzausrüstung gegen Absturz" ausgelegt sein. Ein Radius beträgt vorzugsweise mindestens 300 mm. Ferner können Begehungsöffnungen in den Verbindungsprofilen und/oder in der kegelstumpfförmigen Mantelfläche vorgesehen sein. Jedes der Verbindungsprofile kann eine Begehungsöffnung aufweisen. So können Verbindungsbereiche, beispielsweise Schraubenflansche, zwischen dem Übergangsstück und den Verbindungsprofilen für Montage- und Wartungspersonal zugänglich sein.

Die Verbindungsflächen können an der Außenseite des Übergangsstücks auskragen. Dabei kann eine Mehrzahl von Kragen aus der Außenseite des Übergangsstücks herausragen und die Kragen können wenigstens drei, vorzugsweise jeweils geschlossene, hervorstehende Flansche in Form eines Rahmens bilden. Die Flansche können einen jeweiligen Bereich der Außenseite des Übergangsstückes vollständig oder teilweise einrahmen. Die Flansche können in einer Draufsicht verschiedene Formen aufweisen und beispielsweise dreieckig, rechteckig, quadratisch, kreisförmig, elliptisch, mehreckig sein oder auch eine Kombinationen dieser Formen als Flanschform aufweisen. Eine Oberfläche dieser jeweiligen Kragen, bzw. rahmenförmigen Flansche kann die jeweilige Verbindungsfläche bilden. Vorzugsweise korrespondiert die Form der Verbindungsfläche, wie oben beschrieben, mit einer Verbindungsfläche der Verbindungsprofile. Die Verbindungsprofile können beispielsweise durch Flanschverbindungen, Schubknaggen und/oder durch Schweißverbindungen mit dem Übergangsstück an den Verbindungsflächen verbunden werden.

Die Außenseite des Übergangsstücks weist zwischen den Verbindungsflächen typischerweise längliche Ausformungen auf. Die Ausformungen erstrecken sich vorzugsweise von einer Oberseite des Übergangsstücks bis zu einer Unterseite des Übergangsstücks. Vorzugsweise ist die Krümmung der Ausformungen kontinuierlich und weist insbesondere keine Kanten auf. So können Spannungsspitzen im Übergangstück vermieden werden. Über die Höhe des Übergangsstücks kann die Ausformung, auch Ausnehmung genannt, einen gleichbleibenden Ausnehmungskrümmungsradius aufweisen. Es ist auch möglich, dass der Krümmungsradius der Ausformung sich über die Höhe des Übergangsstücks ändert. Der Krümmungsradius ist dabei definiert als der Radius eines sogenannten Krümmungskreises, der die Form der Ausformung in einem Querschnitt zur Längsachse am besten annähert. Der Krümmungsradius kann mindestens 0,2 m betragen. Der Krümmungsradius kann auch mindestens 0,5 m betragen. Der Krümmungsradius beträgt typischerweise maximal 1 m. Bevorzugt beträgt der Krümmungsradius 0,5 m.

Das Übergangsstück kann einstückig ausgebildet sein. Dies kann beispielsweise den Vorteil haben, dass eine Stabilität erhöht und ein Montageaufwand verringert wird. Dennoch kann das Übergangsstück auch teilbar ausgeführt sein. In solch einem Fall sind die Einzelteile vorzugsweise verschraub- oder verschweißbar. Ferner sind formschlüssige Verbindungen zum Verbinden der Einzelteile denkbar. Mehrteilige Übergangsstücke können den Vorteil haben, dass maximale Abmaße nicht von Transportbedingungen, wie oben bereits erläutert, eingeschränkt werden.

Das Übergangsstück ist für Türme, die Onshore und/oder Offshore verwendet werden, geeignet. Bei einer Onshore-Anwendung weist das Übergangsstück typischerweise entlang einer Längsachse, vorzugsweise entlang der Kegelstumpfachse, eine Höhe von mindestens 2,5 m, vorzugsweise von mindestens 3 m auf. Das Übergangsstück kann ferner eine maximale Höhe entlang der Längsachse von 4,7 m, vorzugsweise von 4 m aufweisen. Dies hat den Vorteil, dass das Übergangsstück bereits zusammengebaut oder in einstückiger Ausführung vergleichsweise leicht transportierbar ist und auf Straßen und unter Brücken auf dem Landweg beförderbar ist. Bei einer Offshore-Anwendung kann die Höhe deutlich höher ausgeprägt sein, beispielsweise bis zu 7m.

In einer Ausführungsform kann das Übergangsstück eine Gesamthöhe entlang einer Längsachse aufweisen, die mindestens 50% eines Durchmessers des oberen Turmabschnitts entspricht. Der Durchmesser des oberen Turmabschnitts ist dabei üblicherweise der Durchmesser des oberen Turmabschnitts an einer Unterkante des oberen Turmabschnitts (ohne Ringflansche). Vorzugsweise kann die Gesamthöhe des Übergangsstücks mindestens 80% des Durchmessers des oberen Turmabschnitts entsprechen. Typischerweise entspricht die Gesamthöhe des Übergangsstücks maximal 150 % des Durchmessers des oberen Turmabschnitts. So können maximale Transportabmessungen eingehalten werden und gleichzeitig Spannungsspitzen in dem Übergangsstück und/oder in einem das Übergangsstück aufweisenden Turm vermieden werden. Das Übergangsstück kann insbesondere bei Offshore-Anwendungen deutlich größere Abmessungen aufweisen.

Für eine verbesserte Transportfähigkeit auf dem Landweg kann das Übergangsstück typischerweise senkrecht zur Längsachse eine laterale Ausdehnung von mindestens 3,5 m, vorzugsweise mindestens 4 m und/oder maximal 5,5 m, vorzugsweise maximal 4,5 m aufweisen. Dabei ist die größte laterale Ausdehnung üblicherweise an einer dem rohrförmigen Turmabschnitt zugewandten Oberseite. Die kleinste laterale Ausdehnung weist das Übergangsstück typischerweise an einer Unterseite, die dem unteren, gitterförmigen Turmabschnitt zugewandt ist, auf. Das Übergangsstück kann, insbesondere bei Offshore-Anwendungen, deutlich größere laterale Ausdehnungen aufweisen.

Ferner kann das Übergangsstück eine laterale Ausdehnung senkrecht zur Längsachse aufweisen, die in jeder Position entlang der Höhe des Übergangsstücks mindestens 0 % des Durchmessers des oberen Turmabschnitts, im Bereich des Verbindungselements zum oberen Turmabschnitt vorzugsweise mindestens 105 % des Durchmessers des oberen Turmabschnitts entspricht. Die maximale laterale Ausdehnung senkrecht zur Längsachse ist typischerweise in jeder Position entlang der Höhe des Übergangsstücks maximal 120 % des Durchmessers des oberen Turmabschnitts. Der Durchmesser des oberen Turmabschnitts ist dabei üblicherweise der Durchmesser des oberen Turmabschnitts an einer Unterkante des oberen Turmabschnitts. So kann eine gute Transportfähigkeit auf dem Landweg erreicht werden, insbesondere auch auf Straßen die eine lichte Breite von nur 5,5 m aufweisen.

Ferner umfasst der vorliegende Turm ein Verbindungsprofil zum Verbinden eines Übergangsstückes, vorzugsweise eines Übergangsstücks gemäß obiger Ausführungen, mit einem unteren Turmabschnitt. Das Verbindungsprofil kann dabei einen oberen Flansch aufweisen, dessen Oberfläche mit den Verbindungsflächen des Übergangsstücks derart korrespondiert, dass das Verbindungsprofil an einer Oberkante an das Übergangsstück an die Verbindungsflächen anflanschbar ist. Das Verbindungsprofil kann ferner ein unteres Verbindungselement, beispielsweise einen unteren Flansch, aufweisen. Das untere Verbindungselement kann beispielsweise derart ausgebildet sein, dass es, vorzugsweise formschlüssig und/oder kraftschlüssig, mit einem Tragglied verbindbar ist. Das Verbindungsprofil kann ein oberes, mit dem Übergangsstück verbindbares Profilelement und einen unteren Einsatz aufweisen. An einer Unterseite des Profilelements kann eine Einsatzausnehmung ausgebildet sein, die zumindest bereichsweise mit einer Außenkontur des Einsatzes derart korrespondieren kann, dass der Einsatz formschlüssig und/oder stoffschlüssig mit dem oberen Profilelement verbunden sein kann. Der Einsatz kann mit dem oberen Profilelement beispielsweise über eine oder mehrere Schweißverbindungen, vorzugsweise zumindest bereichsweise entlang der Einsatzausnehmung, verbunden sein. Typischerweise ist der Einsatz an seiner Unterseite mit einem unteren Turmabschnitt, vorzugsweise lösbar, verbindbar. Eine lösbare Verbindung, beispielsweise eine Schraubenverbindung, hat den Vorteil, dass das Übergangsstück und die Verbindungsprofile unabhängig voneinander transportiert werden können und an einem Einsatzort vergleichsweise einfach montiert werden können. Ein Querschnitt des Einsatzes kann vorzugsweise mit einem Querschnitt der Tragglieder korrespondieren. So kann beispielsweise ein kontinuierlicher Kraftfluss erreicht werden, da ein Kraftversatz im Wesentlichen vermieden wird. Insbesondere kann der untere Turmabschnitt dabei eine Gitterstruktur aufweisen, die zumindest drei sich über die Länge des unteren Turmabschnitts erstreckende Tragglieder aufweist. Die Form des Einsatzes kann vorzugsweise derart mit einer Form eines oberen Endes der Tragglieder korrespondieren, dass der Einsatz an seiner Unterseite auf das obere Ende der Tragglieder auf- oder in das obere Ende einsteckbar ist. Der Einsatz und die Tragglieder können ferner durch eine stoffschlüssige Verbindung, beispielsweise Schweißen, formschlüssige Verbindung, beispielsweise durch Ein- oder Aufstecken, und/oder kraftschlüssige Verbindungen, beispielsweise Flanschen, Schrauben, Nieten o.ä. verbindbar sein. Dabei können zusätzlich oder alternativ Steckverbindungen, Schraubenverbindungen, Schnappverbindungen, Klebverbindungen oder Schweißverbindungen verwendet werden. Der Einsatz und die Tragglieder können zusätzlich oder alternativ mittels Schubknaggen verbindbar sein. Ein Tragglied kann beispielsweise ein quadratisches Profil mit einer Kantenlänge von 800 mm und einer Wandstärke von 25 mm aufweisen. Vorzugsweise weist jedes Tragglied in einem Querschnitt senkrecht zu einer Traggliedlängsachse eine laterale Ausdehnung von mindestens 400 mm auf. Eine Traggliedwandstärke beträgt typischerweise mindestens 10 mm, vorzugsweise mindestens 20 mm und/oder maximal 60 mm. Natürlich können auch Tragglieder anderer Profilformen, beispielsweise U-Profile, rechteckige oder runde Profile, Anwendung finden.

Der Einsatz kann die Aufgabe haben, einen kontinuierlichen Übergang von dem Profilelement auf das Tragglied der darunter befindlichen Gitterstruktur zu gewährleisten. Der Einsatz hat vorzugsweise die Dimensionen des unten anschließenden Traggliedes der Struktur.

Die Verbindungsprofile können einen Querschnitt aufweisen, der sich entlang der Erstreckung der Verbindungsprofile, vorzugsweise kontinuierlich, ändert. Es kann vorgesehen sein, dass sich eine Querschnittsgröße und/oder eine Querschnittsform entlang der Erstreckung des Verbindungsprofils ändern. In einem Querschnitt weist ein Verbindungsprofil in einer Ausführungsform eine sich nach oben aufweitende dreieckige Form auf. Die obere Dreieckskante kann dabei konvex ausgeprägt sein. Die untere Ecke des Dreiecks kann abgerundet ausgebildet sein, vorzugsweise konkav ausgerundet. Die Seitenkanten des Dreiecks können gleich lang ausgeprägt sein oder unterschiedliche Längen aufweisen. Die obere, vorzugsweise konvex ausgebildete Kante kann in einer lateralen Ausdehnung länger sein als die seitlichen Kanten. Die Verbindungsprofile können in einem Querschnitt eine viereckige oder mehreckige Form aufweisen. Vorzugsweise weitet sich die Form in einem Querschnitt nach oben auf. Auch vier- oder mehreckige Querschnittsformen können konkave und/oder konvexe Bereiche aufweisen. Die Verbindungsprofile können als Schweißkonstruktion ausgebildet sein. Die Verbindungsprofile können zusammengeschweißte Wandbleche mit einer Wandstärke von mindestens 10 mm und/oder maximal 60 mm aufweisen. Die Wandbleche eines Verbindungsprofils können verschiedene Wandstärken aufweisen. Vorzugsweise nimmt eine Querschnittsfläche des Verbindungsprofils in einem Querschnitt senkrecht zu einer Längsachse des Verbindungsprofils entlang dieser Längsachse von oben nach unten ab. Dies hat den Vorteil, dass ein Kraftfluss optimiert sein kann und gleichzeitig nur so viel Material wie nötig verbaut ist. Dies kann zu Materialeinsparungen und damit zu Kosteneinsparungen führen. Die Verbindungsprofile weisen typischerweise eine Länge entlang ihrer Erstreckung von mindestens 1 m, vorzugsweise mindestens 8 m und/oder maximal 12 m auf. Insbesondere für Offshore-Anwendungen können die Verbindungsprofile auch eine Länge entlang ihrer Erstreckung von mehr als 12 m aufweisen.

Zumindest eine Wandung des Verbindungsprofils kann in einem Querschnitt senkrecht zu einer Längsachse des Verbindungsprofils zumindest bereichsweise eine konvex geformte Außenkontur aufweisen. Dadurch kann ein Kraftfluss vom oberen Turmabschnitt über das Übergangsstück in den unteren Turmabschnitt verbessert werden. Durch eine derartige Kraftflussoptimierung kann daraufhin Material eingespart werden.

Zumindest eine Wandung des Verbindungsprofils kann in einem Querschnitt senkrecht zu einer Längsachse des Verbindungsprofils zumindest bereichsweise eine konkav geformte Außenkontur aufweisen. Dadurch kann ein Kraftfluss vom oberen Turmabschnitt über das Übergangsstück in den unteren Turmabschnitt verbessert werden. Durch eine derartige Kraftflussoptimierung können Spannungsspitzen vermieden werden und Material eingespart werden.

Die zumindest eine Wandung des Verbindungsprofils kann in einem Querschnitt senkrecht zu einer Längsachse des Verbindungsprofils sowohl zumindest bereichsweise eine konkav geformte Außenkontur als auch zumindest bereichsweise eine konvex geformte Außenkontur aufweisen. Auch durch konkav gekrümmte Formen können Spannungsspitzen vermieden werden.

Die Wandung des Verbindungsprofils kann eben, einfach oder mehrfach gekrümmt sein. Eine mehrfache Krümmung der Verbindungsprofile kann dabei insbesondere durch eine erste Krümmung, beispielsweise durch eine entlang der Längsachse konkave und/oder konvexe Ausbildung der Verbindungsprofile, in Kombination mit einer Krümmung senkrecht zur jeweiligen Längsachse der Verbindungsprofile, realisiert sein.

Um Material einzusparen, können die Verbindungsprofile vorzugsweise zumindest abschnittsweise hohl ausgebildet sein.

Insbesondere bei einer Offshore-Anwendung des Übergangsstücks können die Verbindungsprofile mit dem Übergangsstück einstückig ausgebildet sein. Die Verbindungsprofile können beispielsweise anstelle oder zusätzlich zu Flanschverbindungen mit dem Übergangsstück verschweißt sein.

Ausführungsbeispiele werden nachstehend anhand der Figuren näher erläutert.

Es zeigen:
- Fig. 1: ein Übergangsstück in einer perspektivischen Ansicht,
- Fig. 2: das Übergangsstück in einer Seitenansicht in einer xz-Ebene,
- Fig. 3: das Übergangsstück in einer Draufsicht in einer xy-Ebene,
- Fig. 4: das Übergangsstück verbunden mit einem oberen Turmabschnitt und mit Verbindungsprofilen, die wiederum mit einem unteren Turmabschnitt verbunden sind,
- Fig. 5a -c: eines der Verbindungsprofile in drei verschiedenen Ansichten,
- Fig. 5d: Explosionszeichnung: Verbindungsprofil, Einsatz und Tragglied,
- Fig. 6: das Übergangsstück verbunden mit vier Verbindungprofilen,
- Fig. 7: einen oberen Turmabschnitt, der über das Übergangsstück und die Verbindungsprofile mit einem unteren Turmabschnitt verbunden ist
- Fig. 8: eine schematische Ansicht eines Querschnitts entlang der Kegelstumpflängsachse,
- Fig. 9: eine Detailansicht einer Verbindung zwischen dem Verbindungsprofil und dem unteren Turmabschnitt und/oder dem Übergangsstück
- Fig. 10: eine perspektivische Ansicht eines Verbindungsbereiches zwischen einem Verbindungsprofil und einem Tragglied.

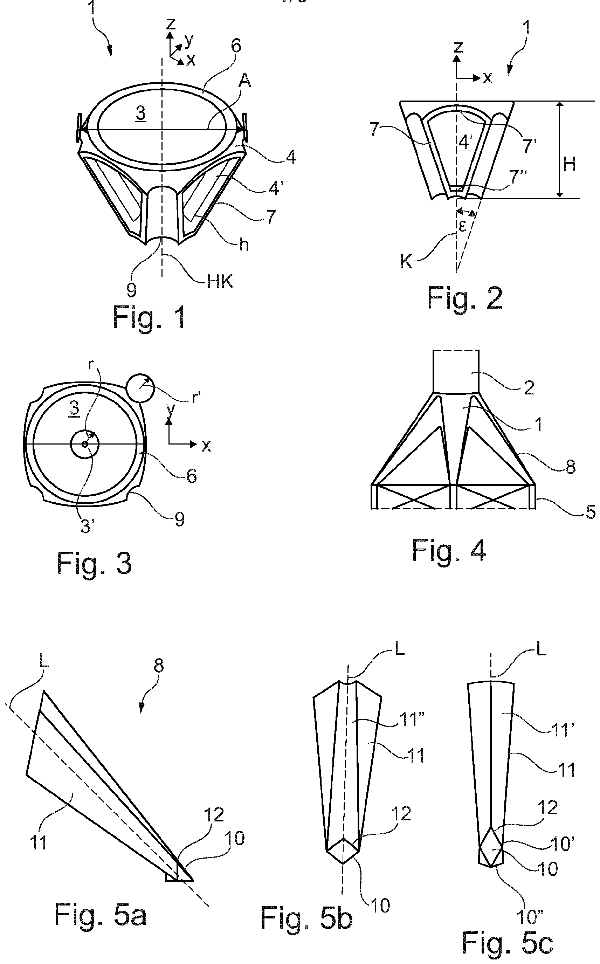

In Figur 1 ist ein Übergangsstück 1 zum Verbinden eines oberen Turmabschnitts 2 über Verbindungsprofile 8 mit einem unteren Turmabschnitt 5 gezeigt. Das Übergangsstück 1 weist eine Mantelinnenfläche 3 auf, die sich kegelstumpfförmig nach oben, hier in z-Richtung, aufweitet. Die kegelstumpfförmige Mantelinnenfläche des Übergangsstücks schließt mit einer Kegelstumpflängsachse K einen Winkel von 24° ein. Die Mantelinnenfläche 3 weist eine glatte Oberfläche auf. Im gezeigten Beispiel hat ein hohler Kegelstumpf, der die Mantelinnenfläche 3 aufweist eine Wandstärke von 40 mm. An einem oberen Abschnitt des Übergangsstücks 1 weist das Übergangsstück 1 ein oberes Verbindungselement 6 auf. Hier ist das obere Verbindungselement 6 als Ringflansch ausgebildet, über den ein oberer rohrförmiger Turmabschnitt mit dem Übergangsstück 1 insbesondere durch Verschrauben und/oder Verschweißen verbindbar ist. Das Übergangsstück 1 ist um eine Kegelstumpflängsachse K drehsymmetrisch. Ferner weist das Übergangsstück 1 drehsymmetrisch um die Kegelstumpflängsachse K vier an einer Außenseite 4 angeordnete äußere Verbindungsflächen 7 auf. Die Verbindungsflächen 7 kragen aus der Außenseite 4 heraus. Vorzugsweise erstrecken sich die Verbindungsflächen 7 nahezu über die gesamte Höhe des Übergangsstücks 1. Die Verbindungsflächen 7 können einen Flansch bilden der sich im Wesentlichen von einem oberen Ende des Übergangsstücks 1 bis zu einem unteren Ende des Übergangsstücks 1 erstreckt. Die Verbindungsflächen 7 können mit korrespondierenden Anlageflächen eines Verbindungsprofils 8 (vgl. Figuren 5a - 5c) verbunden werden. Dafür können die Verbindungsprofile 8 beispielsweise an das Übergangsstück 1 angeschraubt und/oder angeschweißt werden. Die Außenseite 4 des Übergangsstücks 1 weist zwischen den Verbindungsflächen 7 längliche Ausformungen 9 auf. Im gezeigten Beispiel erstrecken sich die Ausformungen 9 von einer Oberkante des Übergangsstücks 1 bis zu einer Unterkante des Übergangsstücks 1. In anderen Ausführungen können sich die Ausformungen auch nur bereichsweise von einer Oberkante zu einer Unterkante des Übergangsstücks erstrecken. Die Ausformungen 9 haben eine glatte Innenfläche ohne Kanten oder Vorsprünge, sodass Spannungsspitzen durch Kerbspannungen im Wesentlichen vermieden bzw. reduziert werden können. Die gezeigten Ausformungen 9 sind nach innen (konkav) in Richtung der Kegelstumpflängsachse K gekrümmt. Die Form der gezeigten Ausformung 9 der Figur 1 in einem Querschnitt senkrecht zur Kegelstumpflängsachse K kann dabei beispielsweise zumindest bereichsweise elliptisch oder kreisförmig sein.

Die Außenkontur des Übergangsstücks in einem Querschnitt senkrecht zur Kegelstumpflängsachse K kann im Bereich der Ausformung beispielsweise auch eine parabolische Form beschreiben.

Das Übergangsstück kann beispielsweise aus Stahl (beispielsweise Baustahl S355) Stahlguss (beispielsweise Kugelgraphitguss), Stahlbeton, Faser-Kunststoff-Verbund bestehen oder Kombinationen daraus beinhalten. Typischerweise wird das Übergangsstück aus Stahl gefertigt. Dazu werden üblicherweise Einzelteile zugeschnitten, verformt und zusammengefügt. Typischerweise werden die Einzelteile mittels Schweißen zusammengefügt, alternative mögliche Fügeverfahren sind aber zum Beispiel auch Schrauben, Nieten und Kleben.

Das Übergangsstück 1 der Figur 1 weist eine maximale laterale Ausdehnung A von 4,8 m auf. Die Höhe H des Übergangsstücks 1 beträgt 3,5 m. Die Verbindungsfläche 7 kragt mit einer Kragenhöhe h von 20 cm bezüglich einer eingerahmten Außenseite 4' des Übergangsstücks aus. Die eingerahmte Außenseite 4' ist dabei diejenige Außenseite des Übergangsstücks, die von den auskragenden Verbindungsflächen 7 eingerahmt wird. Die eingerahmte Außenseite 4' kann dabei insbesondere die Form eines Bereiches einer äußeren Mantelfläche eines sich nach oben aufweitenden Kegelstumpfes aufweisen. Die eingerahmte Außenseite 4' kann dabei beispielsweise Bereiche einer äußeren Mantelfläche von einem Kegelstumpfes darstellen, der die Mantelinnenfläche 3 aufweist. Im Bereich der eingerahmten Außenseiten 4' hat der Kegelstumpf eine Wandstärke von 40 mm.

Figur 2 zeigt eine Seitenansicht des Übergangsstücks 1 der Figur 1 in der xz-Ebene. Die Verbindungsflächen 7 liegen in Figur 2 in einer gegenüber der xz-Ebene geneigten Ebene, die mit der z-Achse einen Winkel α einschließt. Die Verbindungsflächen 7 weisen an einer oberen Kante eine Ausrundung 7' auf und an einer unteren Kante eine Ausrundung 7". Die eingerahmte Außenfläche 4' ist von den auskragenden Verbindungsflächen 7 eingerahmt.

Figur 3 zeigt eine Draufsicht auf das Übergangsstück von oben in einer xy-Ebene. Dabei ist die Mantelinnenfläche 3 gut ersichtlich. Der Kegelstumpf, der die Mantelinnenfläche 3 aufweist, weist an einem unteren Ende eine Öffnung 3' auf. Die Form der Öffnung 3' entspricht dabei im Wesentlichen der unteren kreisrunden Grundfläche des Kegelstumpfes. Ein Radius r dieser kreisrunden Öffnung 3' entspricht im gezeigten Beispiel einem Radius r' der vier Ausformungen 9. In anderen Ausführungen kann der Radius r von dem Ausrundungsradius r' verschieden sein.

Figur 4 zeigt einen Ausschnitt eines Hybridturms mit einem oberen rohrförmigen Turmabschnitt 2, dem Übergangsstück 1, Verbindungsprofile 8 und einen unteren, gitterförmigen Turmabschnitt 5. Der obere Turmabschnitt 2 ist dabei mit dem Übergangsstück 1 über das obere Verbindungselement 6, hier als Ringflansch ausgebildet, mittels Schrauben verbunden. Ferner kann das Übergangsstück 1, insbesondere bei einem Einsatz des Übergangsstücks 1 in einem Turm der im Offshorebereich eingesetzt wird, an den Verbindungsflächen 7 mit den Verbindungsprofilen 8 durch Schweißverbindungen verbunden sein. Die Verbindungsprofile 8 wiederum sind an einer Unterseite mit dem unteren Turmabschnitt 5 verbunden. Die Verbindungsprofile 8 sowie die Verbindung der Verbindungsprofile 8 mit dem unteren Turmabschnitt 5 werden insbesondere in den folgenden Figuren näher erläutert.

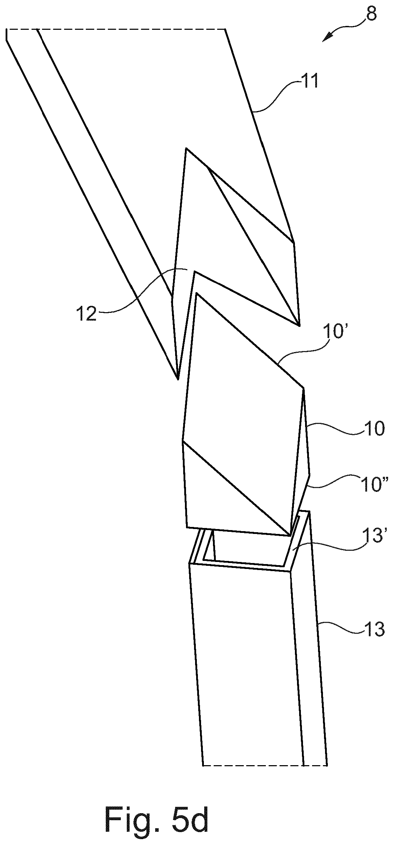

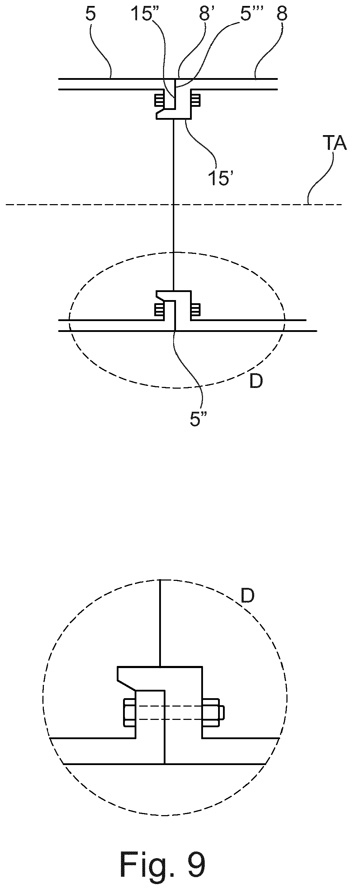

Die Figuren 5a bis 5c zeigen ein Verbindungsprofil 8 aus verschiedenen Perspektiven. Figur 5a zeigt das Verbindungsprofil in einer perspektivischen Seitenansicht. Figur 5b zeigt das Verbindungsprofil 8 in einer Ansicht von unten, Figur 5c zeigt das Verbindungsprofil 8 in einer Ansicht von oben. Das Verbindungsprofil umfasst ein Profilelement 11 und einen Einsatz 10. Das Profilelement 11 weist eine Einsatzausnehmung 12 auf, in die der Einsatz 10 einsteckbar ist. Die Einsatzausnehmung 12 weist dafür eine Form auf, die mit einer Außenkontur des Einsatzes 10 derart korrespondiert, dass der Einsatz 10 in die Einsatzausnehmung passgenau einsetzbar ist. Der Einsatz 10 ist mit der Einsatzausnehmung 12 zusätzlich mittels Schweißverbindungen und/oder Schraubverbindungen verbunden. Das Verbindungsprofil 8 ist vorzugsweise hohl ausgebildet. Insbesondere in der Draufsicht der Figur 5c wird deutlich, dass das Verbindungsprofil 8, hier insbesondere das Profilelement 11, des gezeigten Beispiels eine gekrümmte Wandung 11' umfasst, insbesondere eine um eine Längsachse L konvex gekrümmte Wandung. Ferner umfasst das Profilelement 11 auf der der konvex gekrümmten Wandung 11' gegenüberliegenden Seite eine konkav gekrümmte Wandung 11", also eine Ausrundung, auf. Das Profilelement 11 kann aber auch Seitenkanten aufweisen, die nicht gekrümmt sind, wie beispielsweise in Figur 5a ersichtlich ist. Ferner kann das Profilelement 11 entlang der Längsachse L gekrümmt sein und somit sowohl einfach als auch doppelt gekrümmte Wandungen aufweisen. Ein Querschnitt des Verbindungsprofils 8 senkrecht zur Längsachse L kann sich entlang seiner Erstreckung kontinuierlich ändern. Typischerweise nimmt eine Querschnittsfläche des Verbindungsprofils 8 senkrecht zur Längsachse L von oben nach unten ab. So kann Material eingespart werden, da dieses abhängig von der wirkenden Beanspruchung angeordnet wird. Dabei werden beispielsweise Windkräfte, die an einem oberen Ende des oberen Turmabschnitts angreifen, von dem oberen Turmabschnitt durch das Übergangsstück 1, durch die Verbindungsprofile 8, in den unteren Turmabschnitt 5 und weiter in eine Gründung eingeleitet. Der Einsatz 10 ist, wie oben erwähnt, an einer dem Verbindungsprofil 8 zugewandten Kontur des Einsatzes 10' vorzugsweise mit dem Profilelement 11 verschweißt. An einer Unterseite 10" des Einsatzes weist der Einsatz typischerweise eine Öffnung auf, in die ein Tragglied eines unteren, typischerweise gitterförmigen Turmabschnitts, einsteckbar ist. Vorzugsweise kann ein Tragglied so mit dem Einsatz formschlüssig und/oder stoffschlüssig verbunden werden. Zusätzlich ist es vorteilhaft das Tragglied mit dem Einsatz durch eine Flanschverbindung, insbesondere durch verschraubte Flansche, lösbar mit dem Einsatz zu verbinden. Dabei können zusätzlich oder alternativ Steckverbindungen, Schraubenverbindungen, Schnappverbindungen, Klebverbindungen oder Schweißverbindungen verwendet werden. Die Figur 5d zeigt das Verbindungsprofil 8, der das obere Profilelement 11 und den Einsatz 10 aufweist, und das Tragglied 13 in einer Explosionszeichnung. Die Einsatzausnehmung 12 korrespondiert mit der dem Verbindungsprofil 8 zugewandten Kontur 10' des Einsatzes 10. Die Unterseite 10" des Einsatzes 10 ist mit dem Tragglied 13 verbindbar. Der Einsatz 10 weist dafür an seiner Unterseite 10" eine L-Flansch auf, der mit einem Traggliedflansch 13' korrespondiert. Eine derartige Verbindung ist in Figur 9 genauer beschrieben.

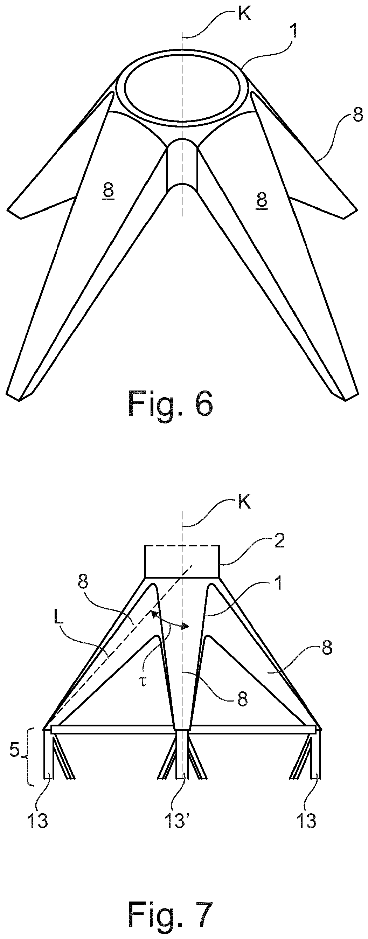

Figur 6 zeigt eine perspektivische Ansicht des Übergangsstücks mit vier Verbindungsprofilen 8. Im dargestellten Beispiel sind vier Verbindungsprofile drehsymmetrisch um die Kegelstumpflängsachse K angeordnet. In einem anderen Beispiel können auch nur drei oder mehr als vier Verbindungsprofile 8 um die Kegelstumpfachse K angeordnet sein. Die Anzahl der Verbindungsprofile 8 ist abhängig von dem unteren Turmabschnitt 5 und der dort verwendeten Anzahl an Traggliedern 13. Die Figur 7 zeigt einen unteren Turmabschnitt 5, der vier Tragglieder 13 aufweist. Das vierte Tragglied ist in der Ansicht der Figur 7 durch das Tragglied 13' verdeckt. Die Anzahl der Tragglieder 13 und die Anzahl der Verbindungsprofile 8 stimmen stets überein, da jedes Verbindungsprofil 8 wie oben beschrieben mit einem Tragglied 13 verbunden ist. Eine Längsachse L des Verbindungsprofils 8 schließt mit der Kegelstumpfachse K im gezeigten Beispiel einen Winkel τ von 42 ° ein. In anderen Ausführungen kann der Winkel τ mindestens 30 °, vorzugsweise größer als 40 ° sein und/oder kleiner als 90 °, vorzugsweise kleiner als 70 ° sein.

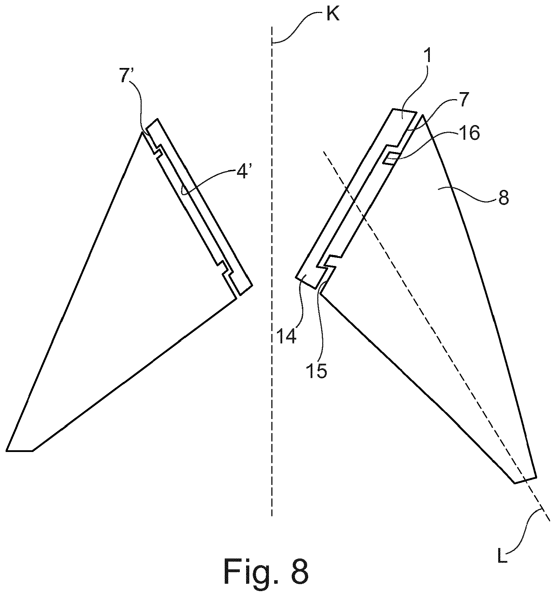

Figur 8 zeigt eine schematische Ansicht eines Querschnitts entlang der Kegelstumpflängsachse K eines Übergangsstücks 1, das im Wesentlichen dem der vorherigen Figuren entspricht. Vier Verbindungsprofile 8 sind mit dem Übergangsstück verbunden. Vier äußere Verbindungsflächen 7 des Übergangsstücks 1 sind im Wesentlichen rotationssymmetrisch um die Kegelstumpflängsachse K an einer Außenseite 4 des Übergangsstücks angeordnet. Das Übergangsstück weist vier Kragen 14 auf, die an der Außenseite 4 des Übergangsstücks 1 auskragen. Jeder Kragen 14 weist dabei eine geschlossene Form auf und bildet einen rahmenförmigen Flansch. Die Verbindungsfläche bildet dabei eine Oberfläche des Kragens 14, bzw. rahmenförmigen Flansch s. Die Kragen 14 sind einstückig mit dem Übergangsstück 1 ausgebildet. An den äußeren Verbindungsflächen 7 ist das Übergangsstück 1 mit je einem mit einem unteren Turmabschnitt 5 verbindbaren Verbindungsprofilen 8 verbindbar. Dazu weisen die Verbindungsprofile 8 einen Flansch 15 auf, dessen Form mit der Form des Kragens 14 korrespondiert. Eine Oberfläche des Flansches 15 des Verbindungsprofils 8 ist an die Verbindungsfläche 7 angelegt und ist mit dieser, beispielsweise mittels Schweißverbindungen (insbesondere bei Türmen, die Offshore eingesetzt werden) oder Schraubverbindungen (insbesondere bei Türmen, die Onshore eingesetzt werden), verbunden. Die Verbindungsprofile 8 weisen an einer Oberseite ferner einen rahmenförmigen Flansch 16 auf, dessen Form mit dem Kragen 14 des Übergangsstück derart korrespondiert, dass der Rahmen 16 des Verbindungsprofils 8 in den Kragen 14 des Übergangsstücks 1 formschlüssig, eingesteckt ist und/oder stoffschlüssig gefügt ist.

Figur 9 zeigt eine Detailansicht einer Verbindung zwischen dem unteren Turmabschnitt 5, beispielsweise in Form eines Stabtragwerks, und dem Verbindungsprofil 8. Figur 9 kann auch eine Verbindung zwischen dem Verbindungsprofil 8 und dem Übergangsstück 1 abbilden. Der Übersichtlichkeit halber entsprechen die in Figur 9 eingepflegten Bezugszeichen denen einer Verbindung zwischen dem unteren Turmabschnitt 5 und dem Verbindungsprofil 8. Die Detailansicht ist in einem Querschnitt entlang einer Traggliedlängsachse TA dargestellt. Dabei weist das Verbindungsprofil 8 an seinem unteren Ende 8' eine nach innen auskragenden L-Flansch 15' auf. Der L-Flansch 15' kann beispielsweise an dem unteren Ende 10" des Einsatzes 10 angeordnet sein. Der L-Flansch 15' weist eine Anlagefläche 15" auf, an der ein korrespondierender Flansch 5''' des unteren Turmabschnitts 5 anliegt. Der Flansch 5''' ist an einer Oberkante 5" des unteren Turmabschnitts angeordnet. Durch die L-Form des L-Flanschs 15' ist das Verbindungsprofil 8 in den unteren Turmabschnitt 5 einsteckbar. Der L-Flansch 15' korrespondiert derart mit dem Flansch 5''' des unteren Turmabschnitts 5, dass der untere Turmabschnitt 5 mit dem Verbindungsprofil 8 formschlüssig und/oder stoffschlüssig verbindbar ist. Ferner weisen der L-Flansch 15' und der Flansch 5''' koaxiale Bohrungen auf. Durch die koaxial korrespondierenden Bohrungen ist eine Schraube gesteckt, die mittels einer Mutter fixiert ist. So sind der untere Turmabschnitt 5 und das Verbindungsprofil 8 zusätzlich reibschlüssig verbunden. Die Detailansicht D zeigt diese Verbindung in einer Vergrößerung. Eine derartige Verbindung kann auch zwischen dem Übergangsstück 1 und dem Verbindungsprofil 8 vorgehsehen sein. So kann das Übergangsstück 1 mit dem Verbindungsprofil form- und reibschlüssig verbunden sein. Dafür weist das Verbindungsprofil 8 an seinem oberen Ende einen oben beschriebenen L-Flansch 15' auf und die Verbindungsflächen 7 des Übergangsstücks 1 bilden einen korrespondierenden Flansch, der dem Flansch 5''' der obigen Beschreibung im Wesentlichen entspricht.

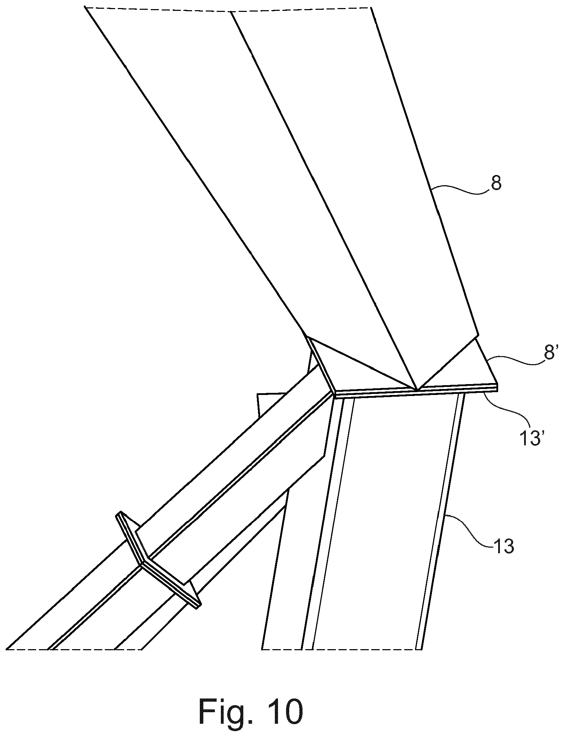

Fig. 10 zeigt in einer perspektivischen Ansicht einen unteren Bereich eines Verbindungsprofils 8, das mit einem Tragglied 13 über eine Flanschverbindung verbunden ist. Das gezeigte Verbindungsprofil 8 weist keinen Einsatz 10 auf, kann in einer anderen Ausführung aber auch einen Einsatz 10 aufweisend ausgebildet sein. Das gezeigte Verbindungsprofil 8 weist an einem unteren Ende 8' einen Flansch in Form einer Bodenplatte auf. Dieser Flansch korrespondiert mit einem Traggliedflansch 13'. Der Flansch des Verbindungsprofils 8 liegt flächig auf dem Traggliedflansch 13' an. Die Flansche können beispielsweise mittels Schraubverbindungen verbunden sein.

### Bezugszeichenliste

- 1: Übergangsstück
- 2: Oberer rohrförmiger Turmabschnitt
- 3: Mantelinnenfläche
- 3': Öffnung
- 4: Außenseite
- 4': eingerahmte Außenseite
- 5: Unterer gitterförmiger Turmabschnitt
- 5": Oberkante des unteren Turmabschnitts
- 5''': Flansch an der Oberkante des unteren Turmabschnitts
- 6: Oberes Verbindungselement
- 7: Verbindungsfläche
- 7': Ausrundung an oberer Kante
- 7": Ausrundung an unterer Kante
- 8: Verbindungsprofil
- 8': unteres Ende des Verbindungsprofils
- 9: Längliche Ausnehmung
- 10: Einsatz
- 10': Oberseite des Einsatzes
- 10": Unterseite des Einsatzes
- 11: Profilelement
- 12: Einsatzausnehmung
- 13: Tragglied
- 13': Traggliedflansch
- 14: Kragen
- 15: Flansch
- 15': L-Flansch
- 15": Anlagefläche des L-Flanschs
- 16: Rahmenförmiger Flansch
- A: laterale Ausdehnung des Übergangsstücks
- H: Höhe des Übergangsstücks
- K: Kegelstumpflängsachse
- L: Verbindungsprofillängsachse
- TA: Traggliedlängsachse
- r: Radius der Öffnung
- r': Radius der länglichen Ausnehmung

- α: Winkel zwischen Verbindungsflächen und Kegelstumpflängsachse
- τ: Winkel zwischen Verbindungsadapterlängsachse und Kegelstumpflängsachse

## Patentansprüche

1. Übergangsstück (1) zum Verbinden eines oberen rohrförmigen Turmabschnittes (2) mit Verbindungsprofilen (8),
wobei das Übergangsstück (1)
ein oberes Verbindungselement (6) zum Verbinden des Übergangsstücks (1) mit dem oberen Turmabschnitt (2) und
eine sich nach oben kegelstumpfförmig aufweitende Mantelinnenfläche (3) aufweist und
zumindest drei im Wesentlichen rotationssymmetrisch um eine Kegelstumpflängsachse an einer Außenseite (4) des Übergangsstücks (1) angeordnete äußere Verbindungsflächen (7) aufweist, an denen das Übergangsstück (1) mit je einem mit einem unteren Turmabschnitt (5) verbundenen Verbindungsprofil (8) verbindbar ist,
**dadurch gekennzeichnet, dass**
die Verbindungsflächen (7) Oberflächen rahmenförmiger Flansche bilden, die sich im Wesentlichen von einem oberen Ende des Übergangsstückes (1) bis zu einem unteren Ende des Übergangsstücks (1) erstrecken,
und das Übergangsstück (1) entlang der Kegelstumpfachse eine Höhe von mindestens 2,5 m aufweist.

2. Übergangsstück nach Anspruch 1, **dadurch gekennzeichnet, dass** das obere Verbindungselement (6) ein Flansch, vorzugsweise ein Ringflansch ist.

3. Übergangsstück (1) nach Anspruch 1 oder 2, **dadurch gekennzeichnet, dass** die Verbindungsflächen (7) an der Außenseite (4) auskragen.

4. Übergangsstück (1) nach einem der vorhergehenden Ansprüche, **dadurch gekennzeichnet, dass** die Außenseite (4) des Übergangsstücks (1) zwischen den Verbindungsflächen (7) längliche Ausformungen (9) aufweist, die sich vorzugsweise von einer Oberseite des Übergangsstücks bis zu einer Unterseite des Übergangsstücks erstrecken.

5. Übergangsstück (1) nach einem der vorhergehenden Ansprüche, **dadurch gekennzeichnet, dass** es einstückig ausgeführt ist.

6. Übergangsstück (1) nach einem der vorhergehenden Ansprüche, **dadurch gekennzeichnet, dass** das Übergangsstück zumindest bereichsweise als Schalentragwerk ausgebildet ist.

7. System, enthaltend ein Übergangsstück (1) nach einem der vorhergehenden Ansprüche und einen Turmabschnitt (2), **dadurch gekennzeichnet, dass** das Übergangsstück (1) entlang einer Längsachse eine Gesamthöhe von mindestens 50 % eines Durchmessers des oberen Turmabschnitts (2) an einer Unterkante des oberen Turmabschnitts (2), vorzugsweise mindestens 80 % des Durchmessers des oberen Turmabschnitts (2) an einer Unterkante des oberen Turmabschnitts (2), und/oder maximal 150 % des Durchmessers des oberen Turmabschnitts (2) an einer Unterkante des oberen Turmabschnitts (2) aufweist.

8. System gemäß Anspruch 7 und/oder enthaltend ein Übergangsstück (1) nach einem der Ansprüche 1 bis 6 und einen Turmabschnitt (2), **dadurch gekennzeichnet, dass** das Übergangsstück (1) senkrecht zur Längsachse eine laterale Ausdehnung von mindestens 0 % eines Durchmessers des oberen Turmabschnitts (2) an einer Unterkante des oberen Turmabschnitts (2), vorzugsweise mindestens 105 % des Durchmesser des oberen Turmabschnitts (2) an einer Unterkante des oberen Turmabschnitts (2) und/oder maximal 200 % des Durchmessers des oberen Turmabschnitts (2) an einer Unterkante des oberen Turmabschnitts (2) aufweist, wobei eine maximale laterale Ausdehnung vorzugsweise an einer Oberkante des Übergangsstücks ausgebildet ist.

## Claims

1. A transition piece (1) for connecting an upper tubular tower portion (2) to connection profiles (8),
the transition piece (1) comprising
an upper connection element (6) for connecting the transition piece (1) to the upper tower portion (2), and
an inner lateral surface (3) widening toward the top in a frustoconical manner, and
at least three outer connection faces (7), which are arranged on an outer side (4) of the transition piece (1) substantially rotation-symmetrically about the frustum longitudinal axis and at which the transition piece (1) is connectable to one connection profile (8), connected to a lower tower portion (5), each,
**characterized in that**
the connection faces (7) form surfaces of frame-like flanges, which substantially extend from an upper end of the transition piece (1) to a lower end of the transition piece (1),
and the transition piece (1) has a height of at least 2.5 m along the frustum longitudinal axis.

2. The transition piece according to claim 1, **characterized in that** the upper connection element (6) is a flange, and preferably a ring flange.

3. The transition piece (1) according to claim 1 or 2, **characterized in that** the connection faces (7) protrude on the outer side (4).

4. The transition piece (1) according to any one of the preceding claims, **characterized in that** the outer side (4) of the transition piece (1) has elongate shapings (9) between the connection faces (7), which preferably extend from an upper side of the transition piece to a lower side of the transition piece.

5. The transition piece (1) according to any one of the preceding claims, **characterized by** being formed integrally.

6. The transition piece (1) according to any one of the preceding claims, **characterized in that** the transition piece is formed at least in part as a supporting structure in the form of a shell.

7. A system, comprising a transition piece (1) according to any one of the preceding claims and a tower portion (2), **characterized in that** the transition piece (1) has a total height along a longitudinal axis of at least 50% of a diameter of the upper tower portion (2) at a lower edge of the upper tower portion (2), preferably at least 80% of the diameter of the upper tower portion (2) at a lower edge of the upper tower portion (2), and/or at most 150% of the diameter of the upper tower portion (2) at a lower edge of the upper tower portion (2).

8. The system according to claim 7 and/or comprising a transition piece (1) according to any one of claims 1 to 6, and a tower portion (2), **characterized in that** the transition piece (1) has a lateral extension perpendicular to the longitudinal axis of at least 0% of a diameter of the upper tower portion (2) at a lower edge of the upper tower portion (2), preferably at least 105% of the diameter of the upper tower portion (2) at a lower edge of the upper tower portion (2), and/or at most 200% of the diameter of the upper tower portion (2) at a lower edge of the upper tower portion (2), a maximum lateral extension preferably being configured to be at an upper edge of the transition piece.

## Revendications

1. Pièce de transition (1) servant à relier une section de tour supérieure (2) en forme de tube à des profilés de liaison (8),
où la pièce de transition (1) présente
un élément de liaison supérieur (6) servant à relier la pièce de transition (1) avec la section de tour supérieure (2) et
une surface intérieure d'enveloppe (3) s'élargissant vers le haut en forme de cône tronqué et
au moins trois surfaces de liaison (7) extérieures disposées essentiellement de manière symétrique en rotation autour d'un axe longitudinal de cône tronqué sur un côté extérieur (4) de la pièce de transition (1), surfaces sur lesquelles la pièce de transition (1) peut être respectivement liée avec un profilé de liaison (8) lié avec une section de tour inférieure (5),
**caractérisée en ce que**
les surfaces de liaison (7) forment des surfaces de brides en forme de cadre qui s'étendent essentiellement à partir d'une extrémité supérieure de la pièce de transition (1) jusqu'à une extrémité inférieure de la pièce de transition (1),
et la pièce de transition (1) présente une hauteur d'au moins 2,5 m sur la longueur de l'axe du cône tronqué.

2. Pièce de transition selon la revendication 1, **caractérisée en ce que** l'élément de liaison supérieur (6) est une bride, de préférence une bride annulaire.

3. Pièce de transition (1) selon la revendication 1 ou la revendication 2, **caractérisée en ce que** les surfaces de liaison (7) forment une collerette vers l'extérieur sur le côté extérieur (4).

4. Pièce de transition (1) selon l'une des revendications précédentes, **caractérisée en ce que** le côté extérieur (4) de la pièce de transition (1) présente des formes (9) allongées entre les surfaces de liaison (7), qui s'étendent de préférence à partir d'un côté supérieur de la pièce de transition jusqu'à un côté inférieur de la pièce de transition.

5. Pièce de transition (1) selon l'une des revendications précédentes, **caractérisée en ce qu'**elle est conçue d'un seul tenant.

6. Pièce de transition (1) selon l'une des revendications précédentes, **caractérisée en ce que** la pièce de transition est conçue au moins par endroits sous forme d'une structure en coque.

7. Système, contenant une pièce de transition (1) selon l'une des revendications précédentes et une section de tour (2), **caractérisé en ce que** la pièce de transition (1) présente sur la longueur d'un axe longitudinal une hauteur totale égale à au moins 50 % d'un diamètre de la section de tour supérieure (2) au niveau de l'arête inférieure de la section de tour supérieure (2), de préférence au moins 80 % du diamètre de la section de tour supérieure (2) au niveau de l'arête inférieure de la section de tour supérieure (2), et/ou au maximum 150 % du diamètre de la section de tour supérieure (2) au niveau d'une arête inférieure de la section de tour supérieure (2).

8. Système selon la revendication 7 et/ou contenant une pièce de transition (1) selon l'une des revendications 1 à 6 et une section de tour (2), **caractérisé en ce que** la pièce de transition (1) présente, perpendiculairement à l'axe longitudinal, une extension latérale égale à au moins 0 % d'un diamètre de la section de tour supérieure (2) au niveau d'une arête inférieure de la section de tour supérieure (2), de préférence au moins 105 % du diamètre de la section de tour supérieure (2) au niveau d'une arête inférieure de la section de tour supérieure (2) et/ou au maximum 200 % du diamètre de la section de tour supérieure (2) au niveau d'une arête inférieure de la section de tour supérieure (2), où une extension latérale maximale est de préférence formée au niveau d'une arête supérieure de la pièce de transition.
